(19) Europäisches Patentamt
European Patent Office
Office européen des brevets

(11) Publication number: **0 427 232 A2**

# (12) EUROPEAN PATENT APPLICATION

(21) Application number: **90121306.6**

(51) Int. Cl.5: **G02B 6/06**, G02B 23/26

(22) Date of filing: **07.11.90**

(30) Priority: **08.11.89 JP 288825/89
13.12.89 JP 321494/89
27.12.89 JP 336369/89**

(43) Date of publication of application:
**15.05.91 Bulletin 91/20**

(84) Designated Contracting States:
**DE GB IT NL**

(71) Applicant: **MITSUBISHI RAYON CO., LTD
3-19, Kyobashi 2-chome Chuo-ku
Tokyo(JP)**

(72) Inventor: **Suzuki, Fumio, c/o Central Research Lab.
Mitsubishi Rayon Company Ltd., 20-1 Miyuki-cho
Otake-shi, Hiroshima(JP)**
Inventor: **Okamoto, Masashi, c/o Central Research Lab.
Mitsubishi Rayon Company Ltd., 20-1 Miyuki-cho
Otake-shi, Hiroshima(JP)**
Inventor: **Sumi, Toshinori, c/o Central Research Lab.
Mitsubishi Rayon Company Ltd., 20-1 Miyuki-cho
Otake-shi, Hiroshima(JP)**
Inventor: **Shimada, Katsuhiko, c/o Central Research Lab.
Mitsubishi Rayon Company Ltd., 20-1 Miyuki-cho
Otake-shi, Hiroshima(JP)**

(74) Representative: **ter Meer, Nicolaus, Dipl.-Chem.Dr.
Patentanwälte ter Meer, Müller, Steinmeister
Mauerkircherstrasse 45
W-8000 München 80(DE)**

## (54) Multifilament type optical fiber and process for preparation thereof.

(57) A multifilament type plastic optical fiber having a circular or substantially circular peripheral shape in the cross-section of the fiber, wherein 50 to 30000 islands having a diameter of .2 to 70 µm, a light- and image-transmitting property and a circular cross-sectional shape are integrally arranged in the sea in the form of a hexagonal enclosed package. The fiber is prepared by a process which comprises spinning island-forming and sea-forming plastics by using an island-forming nozzle having holes arranged in the form of a hexagonal enclosed package and a sea-forming nozzle, extruding the plastics in the form of independent optical fiber precursors having a concentric two- or three-layer structure, and gathering and integrating the extruded optical fiber precursors to form a multifilament optical fiber in which 50 to 30,000 light-transmitting islands having a diameter of 2 to 70 µm are arranged in the sea in the form of a hexagonal enclosed package, and the cross-sectional peripheral shape of the fiber is substantially circular.

Fig. 1B

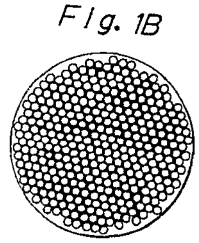

EP 0 427 232 A2

## MULTIFILAMENT TYPE OPTICAL FIBER AND PROCESS FOR PREPARATION THEREOF

The present invention relates to a multifilament type optical fiber which is useful as an endoscope, a line point sensor, and a drawing reading sensor; especially as an image-transmitting member for a blood vessel endoscope or an internal ear scope.

(2) Description of the Related Art

A multifilament type optical fiber comprising silica optical filaments having a diameter smaller than 200 μ, which are arranged at a high degree of orientation and bonded to one another through an adhesive is capable of transmitting an image by light and is used as an endoscope mainly in the field of medical instruments, as represented by a stomach camera.

In the multifilament type silica optical fiber, the diameter of individual filaments can be easily made smaller than in the plastic type optical fiber, and therefore, the development of a multifilament type silica optical fiber having an image element number as large as 10,000 or more has been rapid. Nevertheless, this multifilament type optical fiber has a serious defect in that, since the fineness thereof is very small and the resistance to bending is very low, the silica optical fiber is relatively easily broken by a bending operation during use, and the broken part of the optical fiber produces a defective image.

Moreover, because of the properties of silica glass, the multifilament type optical fiber formed of silica optical filaments is rigid, and when the multifilament type optical fiber is used as an image scope it is difficult to increase the bending angle, and thus the visual field that can be inspected is narrow.

Accordingly, attempts have been made to develop a multifilament type plastic optical fiber comprising many plastic optical filaments, which is not easily broken, and which can be bent more easily than the multifilament type silica optical fiber.

For example, U.S. Patent No. 3,556,635 discloses a multifilament type plastic optical fiber having a section having a rectangular peripheral shape, in which a light-transmitting path has a substantially rectangular shape. Although a transmission of light through this optical fiber is possible, since the section of the light-transmitting path has a rectangular shape, an accurate color or shape of a light-transmitted image cannot be obtained.

The islands-in-the-sea conjugate spinning nozzle used in this invention has a complicated structure such that core-forming pipes are vertically implanted in a sheath-forming orifice plate, and sheath-forming pipes are vertically implanted in a sea-forming orifice plate. Accordingly, dead spaces are formed in the portions of the respective pipe ends implanted in the orifice, and during the conjugate spinning, a hot molten polymer stagnates in these dead spaces and the polymer is thermally deteriorated to form foreign substances. Therefore, it is difficult to prepare a multifilament type plastic optical fiber having a good light-transmitting property, and further, a reduction of the image-transmitting element defects described below.

Japanese Unexamined Patent Publication No. 56-39505 discloses an ultrafine plastic optical fiber having a circular cross-section. Since islands acting as light-transmitting paths are randomly arranged in the cross-section of this multifilament type optical fiber, the cross-sectional shapes of the respective islands are indefinite, and these islands each have different light-transmitting characteristics. Accordingly, an image cannot be precisely transmitted, and thus the optical fiber is not satisfactory as an image-transmitting member.

Japanese Examined Patent Publication No. 59-14570 discloses an islands-in-the-sea multi-component fiber, in which islands present in the peripheral portion of the cross-section of the fiber have substantially a square-to-pentagonal cross-sectional shape, islands surrounded by these islands have substantially a square-to-heptagonal cross-sectional shape, and islands located close to the center of the cross-section of the fiber have a cross-sectional shape resembling a circle. In this multifilament type optical fiber, the respective islands each have different light-transmitting characteristics, and therefore, the multifilament type optical fiber can not be satisfactorily used as an image-transmitting member.

Japanese Unexamined Patent Publication No. 63-326604 (European Patent No. 250,209) discloses a multifilament type optical fiber having a substantially rectangular cross-sectional shape, in which light-transmitting islands are arranged in the sea in the form of a hexagonal enclosed package. Since the light-transmitting islands have a substantially circular cross-sectional shape, this optical fiber has excellent image-transmitting characteristics, but since the cross-section of the optical fiber as a whole has a rectangular shape, the fiber has a bending directionality and the handling thereof is difficult. Furthermore, when this optical fiber is used in an endoscope or the like, the efficiency of the utilization of the section is

reduced, and therefore, this optical fiber is unsatisfactory as a multifilament type optical fiber for a blood vessel endoscope in which the sectional shape is reduced as much as possible. This optical fiber also is difficult to handle.

Japanese Examined Patent Publication No. 58-31402 discloses a process for the preparation of a multifilament type plastic fiber. According to this process, a multifilament type plastic fiber is prepared by using a spinneret for the production of an islands-in-the-sea multifilament type fiber, which comprises a core-distributing orifice, a sheath-distributing orifice, a sea-distributing orifice, and a fiber-gathering orifice, in the piled state, feeding a sea-forming polymer, a sheath-forming polymer and a core-forming polymer in sequence to the distributing orifices for the respective polymers, and extruding the polymers from the orifices.

This process is characterized in that a pipe-implanted spinneret is used as the spinneret, and is very useful for the production of microfibers for clothing. Nevertheless, this process is defective in that the pipes of the spinneret are apt to generate vibration at the spinning step, and it is difficult to prepare a multifilament type fiber having a cross-section of a true circle, and further, it is very difficult to prepare a multifilament type optical fiber having good image-transmitting characteristics by using this spinneret. Moreover, holes of the spinning nozzles arranged in the spinneret are radially arranged and a hexagonal enclosed packaging arrangement is not obtained. Therefore, the fiber prepared according to this process is defective in that the cross-sectional shapes of islands arranged in the peripheral portion of the cross-section are deformed.

For the production of a multifilament type optical fiber to be used for an endoscope, to improve the image-transmitting property by increasing the image resolving power, the number of image-transmitting elements must be increased. Namely, the number of image-transmitting elements is usually at least 300, preferably at least 1000 and most preferably at least 3000. In particular where a broad region is observed by one picture, as in case of a stomach camera, preferably the light or image-transmitting member has at least 10000.

In a multifilament type plastic optical fiber in which the number of image-transmitting elements is increased while keeping the image-transmitting element diameter constant, the outer diameter of the fiber is increased, the softness is lost, and the optical fiber cannot be easily used as the image-transmitting member of an endoscope. In particular, in the case of an endoscope to be used in thin bent portions, such as a blood vessel endoscope, a good softness or pliability must be maintained in the image-transmitting member, and therefore, in a multifilament type plastic optical fiber, a good softness must be maintained by reducing the diameter of image-transmitting elements and reducing the outer diameter of the fiber.

Nevertheless, in the case of a multifilament type plastic optical fiber in which the diameter of the core is smaller than 2.0 $\mu$m, particularly smaller than 1.0 $\mu$m, the light-transmission is poor, the image-transmitting element defect of a reduction of the brightness is most conspicuous, and the quality of the transmitted image is low. If the quantity of light transmitted through one image-transmitting element (transmitted quantity) is smaller than that of adjoining image-transmitting elements, this portion of the image-transmitting element produces a stain, and thus the problem of a reduction of the image quality arises.

The present inventors investigated the above-mentioned phenomena, and as a result, found that a multifilament type optical fiber, i.e., a multifilament type optical fiber having a circular or substantially circular cross-sectional shape, in which the cross-sectional shape of islands forming a light or image-transmitting path, which are arranged in the sea, is substantially circular, and the number of picture elements is 50 to 30,000, the production of which was considered to be impossible, can be prepared. It also was found that, in this multifilament type optical fiber, if the number of islands not transmitting light and forming an image-transmitting element defect is less than 1 per 100 of the total light-conducting islands, preferably less than 0.1 per 100 of the total light-conducting islands, the quality of the transmitted image is improved. Furthermore, it was found that, if the light transmission quantity of picture elements causing a stain in the image (hereinafter referred to as "stain picture elements") is less than 0.7 times the average light or image-transmission quantity of the total islands, and if the number of such stain picture elements is less than 3, preferably less than 1, per 100 of the islands, the quality of the transmitted image is further improved. Moreover, it was found that the above-mentioned image-transmitting element defect and the reduction of the light transmission quantity is due not only to foreign substances or dust contained in a resin constituting a core acting as the main light or image-transmitting path of the island, but also to foreign substances or dust contained in a resin constituting the sheath and sea, and if the number and size of dust particles contained in the resins constituting the multifilament type optical fiber are reduced, the number of image-transmitting element defects can be reduced to a level at which substantially no problems arise.

More specifically, in accordance with the present invention, there is provided a multifilament type optical fiber having a circular or substantially circular peripheral shape in the cross-section of the fiber,

wherein 50 to 30000 islands having a diameter of 2 to 70 µm, a light or image-transmitting property, and a circular cross-sectional shape are integrally arranged in the sea in the form of a hexagonal enclosed package. Further, in accordance with one preferred embodiment of this multifilament type optical fiber, the number of islands forming an image-transmitting element defect is less than 1 per 100 of light-conducting islands.

In accordance with another aspect of the present invention, there is provided a process for the preparation of a multifilament type optical fiber having no or less image-transmitting element defects, which comprises using a spinneret assembled by arranging in sequence a core-distributing orifice, a core-forming orifice having many core-supplying holes, and a sea-forming orifice having sea-supplying holes and sea-overflowing projections formed on the upper outer peripheries of the sea-supplying holes, the holes on each orifice surface being arranged in the form of a hexagonal enclosed package, filling a core-forming polymer in a core supply portion in the core-supplying orifice and the core-forming orifice, supplying a sea-forming polymer to the sea-forming orifice, extruding the polymers, forming a true conjugate fiber by a melt conjugate spinning method, and gathering and fusion-bonding the extruded filaments to form a multifilament type optical fiber in which islands are arranged in the form of a hexagonal enclosed package.

Figure 1A is an enlarged plane view illustrating a spinning nozzle for use in carrying out the present invention, and Fig. 1B is an enlarged sectional view illustrating a multifilament type optical fiber of the present invention;

Fig. 2A is an enlarged sectional view illustrating a customarily used spinning nozzle, and Fig. 2B is an enlarged sectional view illustrating a fiber prepared by using the conventional spinning nozzle shown in Fig. 2A; and,

Fig. 3 is an enlarged partial view illustrating a spinneret that can be utilized in the present invention.

According to the conventional process for the preparation of a multifilament type optical fiber, by using a nozzle having holes radially arranged on the nozzle surface, as shown in Fig. 2A, or a nozzle having holes circularly arranged, a plurality of filaments are independently extruded, and the extruded filaments are gathered to form a multifilament type fiber. The cross-section of the multifilament type fiber obtained according to this conventional process has a substantially circular outer peripheral as shown in Fig. 2B, but the cross-sections of individual filaments arranged in this circular cross-section have polygonal and non-uniform shapes. This tendency becomes conspicuous when the ratio of the sectional area of the core to the total sectional area (core occupancy ratio) in the cross-section of the multifilament type optical fiber exceeds 30%, and therefore, it is impossible to develop a multifilament type optical fiber having a high resolving power.

The inventors attempted to obtain a multifilament type optical fiber having a circular cross-section and not having the above-mentioned disadvantage, and as a result found that, if a multifilament spinning nozzle having a hole arrangement quite different from that of the conventional nozzle, i.e., a spinning nozzle in which holes are formed in a hexagonal enclosed packaging arrangement and are gathered in a substantially circular shape as shown in Fig. 1A, a multifilament type optical fiber in which islands have a substantially circular cross-sectional shape, the islands are arranged in the form of a hexagonal enclosed package, and the cross-section of the fiber has a circular or substantially circular shape, as shown in Fig. 1B, is obtained.

The present invention is useful for the production of a multifilament type optical fiber having a high resolving power and a core area occupancy ratio of at least 30%, most preferably 40 to 90%, and the multifilament type optical fiber according to the present invention has no bending directionality and is capable of transmitting a sharp image with a high resolving power.

In the multifilament type optical fiber according to the present invention, the diameter of the constituent islands must be at least 2 to 70 µm, preferably 2 to 20 µm, most preferably 2 to 10 µm. A multifilament type optical fiber in which the diameter of the islands is smaller than 2 µm has poor light or image-transmitting characteristics, and thus a bright and sharp image cannot be transmitted. If the diameter of the islands is more than 70 µm, since the diameter of image-transmitting elements becomes too large, the density of image-transmitting elements is too small and the obtained multifilament type optical fiber cannot be used for an endoscope.

Preferably, the number of light or image-transmitting elements arranged in the sea is at least 50, most preferably at least 300. Where a multifilament type optical fiber having less than 50 light or image-transmitting elements is used as an image-transmitting member, the number of image-transmitting elements is too small and the optical fiber is not satisfactory for use as an image-transmitting member for an endoscope.

Preferably, the number of light or image-transmitting elements is up to 30,000 most preferably up to 10,000. If the number of the islands exceeds 30,000, even if the diameter of the core as the main optical path of the island is reduced, the diameter of the multifilament type optical fiber becomes too large and the

multifilament type optical fiber becomes rigid, and thus handling of the optical fiber becomes difficult.

In the multifilament type optical fiber according to the present invention, the light or image-transmitting elements must be arranged in the sea in the form of a hexagonal enclosed package. If the islands are radially or randomly arranged in the sea, since the periphery of the cross-section of the multifilament type optical fiber has a circular shape, as shown in Fig. 2B, the individual islands have a non-uniform cross-sectional shape, and thus a multifilament type optical fiber having good image-transmitting properties cannot be obtained. In contrast, in the multifilament type optical fiber according to the present invention, since the islands have a hexagonal enclosed packaging arrangement, even if the cross-section of the multifilament type optical fiber has a substantially circular shape, light or image-transmitting elements having non-uniform cross-sectional shapes are not formed, and thus superior image-transmitting properties can be maintained.

The multifilament type optical fiber of the present invention has a substantially circular cross-sectional shape. In the present invention, the term "substantially circular shape" includes a polygonal shape such as at least a hexagonal shape, a circular shape, and an ellipsoidal shape. In a multifilament type optical fiber having such a substantially circular cross-sectional shape, the bending directionality is eliminated and the handling is very good.

The light or image-transmitting member used for a fine diameter endoscope such as a blood vessel endoscope should have a more reduced outer diameter while maintaining the resolving power at a high level. Namely, the outer diameter of the multifilament type optical fiber must be reduced while keeping the number of light or image-transmitting elements (islands) of the fiber constant. To realize this feature, the diameter of the image-transmitting elements, i.e., the islands, must be much reduced, and in a multifilament type optical fiber for a fine diameter endoscope, preferably the diameter of the light path of the islands is smaller than 20 $\mu m$, most preferably smaller than 10 $\mu m$.

Nevertheless, if the diameter of the light path of the islands is smaller than 20 $\mu m$, the number of image-transmitting element defects is increased and the image-transmittance of the multifilament type optical fiber often becomes poor. The image-transmitting element defects are divided into two types. The first type of defect is a black point-like defect caused by an island which does not transmit light at all, and this defect will be called a "image-transmitting element defect" hereinafter. The other type of defect is a stain caused by an island having a lower light transmission quantity than that of neighboring islands, and this defect will be called a "stain image-transmitting element" hereinafter.

Since the first picture element defect is very conspicuous, the number of defects of this type must be reduced as much as possible, and to prevent a reduction of the image-transmitting property, preferably the number of image-transmitting element defects is smaller than 1, most preferably smaller than 0.1, per 100 of islands. It is particularly preferable that no such picture element defects are present at the central part of the fiber at all.

Stain image-transmitting elements as the second picture element defect are not as conspicuous as the first image-transmitting element defect, but these stain image-transmitting elements become conspicuous when an entirely dark uniform image is transmitted, and cause a yellowing of the transmitted image. Therefore, a reduction of the number of stain image-transmitting elements is preferable. Namely, to prevent a reduction of the image-transmittance, preferably the number of stain image-transmitting elements is less than 3, most preferably less than 1, per 100 of islands.

Stain image-transmitting elements have a lower light transmission quantity than that of neighboring image-transmitting elements, and whether or not they are conspicuous depends on the brightness and brightness uniformity of the transmitted image. Namely, if the light transmission quantity of the stain image-transmitting element is lower than 70% of the light transmission quantity of neighboring image-transmitting elements, the stain image-transmitting element becomes conspicuous. Therefore, in the present invention, an island having a light transmission quantity smaller than 70% of the average light transmission quantity in all of the islands is defined to be a stain image-transmitting element. This definition agrees relatively well with the result of a visual inspection test by the naked eye.

Most of the above-mentioned image-transmitting element defects are due to foreign substances contained in resins constituting the optical fiber of the present invention, and the foreign substances have a serious influence on the transmission attenuation of the optical fiber. The term "foreign substances contained in resins" as used herein refers to dust or gel-like materials in resins.

The size and number of dust particles contained in the resins constituting the optical fiber of the present invention are important factors having an influence on the number of image-transmitting element defects and the transmission attenuation in the multifilament type plastic optical fiber. Currently, the lower limit for a detection of the size of a foreign substance is 0.5 $\mu m$, i.e., foreign substances having a size smaller than this limit cannot be detected. If the number of foreign substances having a size larger than 0.5

µm is larger than 10,000 per gram of the resin, the number of image-transmitting element defects is greatly increased and the transmission attenuation correspondingly increased.

Especially, foreign substances in the resin constituting the core or sheath through which light actually passes become the cause of the formation of image-transmitting element defects and a darkening of the image. Accordingly, the number of these foreign substances must be reduced as much as possible. An increase of the transmission attenuation in the multifilament type optical fiber due to foreign substances tends to become conspicuous in the short wavelength region, and the percent transmission of a short wavelength component is reduced and a yellowing of the image occurs, and therefore, it is impossible to transmit an image while maintaining a precise color. To prevent a discoloration of the image, preferably the number of foreign substances in resins constituting the core and sheath acting as light or image-transmitting paths is reduced as much as possible. More specifically, preferably the number of foreign substances having a size larger than 0.5 µm, and which are contained in 1 g of the core-constituting resin, is less than 4,000, most preferably less than 2,000. Also, preferably the number of foreign substances having a size larger than 0.5 µm, and contained in 1 g of the sheath-constituting resin, is less than 4,000.

Of these foreign substances, the presence of dust particles or foreign substances having a size larger than 70% of the diameter of the core (hereinafter referred to as "coarse foreign substances") bring a very high probability of causing image-transmitting element defects. Accordingly, preferably the number of coarse foreign substances contained in 1 g of the core-constituting resin is less than 50, more preferably less than 20, most preferably less than 10, and that the number of coarse foreign substances contained in 1 g of the sheath-constituting resin is less than 50, most preferably less than 20. The content of foreign substances in the resin can be reduced by a precision filtration of the starting material to be polymerized, using a hollow fiber filtration membrane or the like, a formation of clean rooms for the polymerization and spinning atmospheres, and the disposition of a precision filtration filter just before the spinning nozzle, whereby the intended object of the present invention can be attained.

In the present invention, the number of foreign substances contained in the resins constituting the optical fiber is measured according to the following method. Namely, a predetermined amount of the resin is dissolved in a solvent to form a dilute solution having a resin concentration of 0.1%, the number of foreign substances contained in a predetermined amount of the solution is counted by a liquid fine particle counter (HIAC/ROYCO Liquid Fine Particle Counter supplied by HIAC/ROYCO Co.), and the number of foreign substances contained in 1 g of the resin is calculated from the counted value.

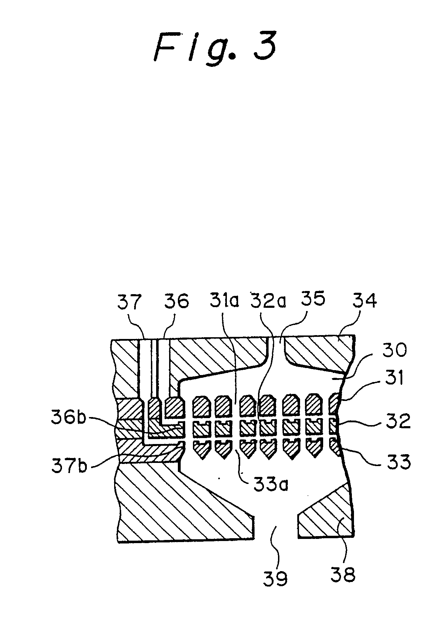

Figure 3 is a sectional view illustrating an example of the spinning apparatus preferably used for the production of the multifilament type optical fiber of the present invention, in which the islands have a core-sheath structure. The spinneret used for this apparatus comprises an orifice plate 31 for forming the cores of the islands, a sheath-forming orifice plate 32 and a sea-forming orifice plate 33, as the main constituent elements, and the spinneret is characterized in that, on each orifice plate, holes are arranged in the form of a hexagonal shape as shown in Fig. 1A. Reference numeral 38 in Fig. 3 represents a gathering orifice. The shape of a gathering hole 39 must be substantially circular. In Fig. 3, reference numerals 31a, 32a, and 33a represent a core-spinning hole, a sheath-spinning hole, and a sea-spinning hole, respectively, and reference numerals 35, 36, and 37 represent a core supply hole, a sheath supply hole, and a sea supply hole, respectively. Each of the holes on the respective spinning plate was arranged on an approximately hexagonal enclosed package as shown in Fig. 1A. Furthermore, reference numerals 36b and 37b represent a sheath-overflowing projection and a sea-overflowing projection, respectively, and these overflowing projections are arranged so that they surround the nozzle holes.

The core component supplied from the core supply hole is distributed in the core-forming nozzle hole 41a, and the sheath component supplied from the sheath supply hole 36 is supplied to the periphery of the core beyond the overflowing projection 36b. The sea component supplied from the sea supply hole 37 is supplied to the periphery of the sheath beyond the overflowing projection 37b. The core/sheath/sea components are once extruded from the extrusion hole 33a in the form of independent true conjugate optical fiber precursors, where these components are concentrically arranged, and these extruded optical fiber precursors are integrated at the gathering hole 39 to obtain a multifilament type optical fiber having a substantially circular cross-sectional shape and in which islands having a substantially circular cross-sectional shape are regularly arranged in the form of a heragonal enclosed package, as shown in Fig. 1B.

It has been found that, when the preparation of the multifilament type optical fiber of the present invention is started by using the spinning apparatus shown in Fig. 3, if the order and method of introducing resins constituting the core, sheath and sea into the spinning apparatus are not correct, the resins flow into parts other than predetermined positions and many image-transmitting element defects appear in the obtained multifilament type optical fiber. For example, if the sea-forming polymer is first supplied to the spinneret and the sheath-forming polymer is then supplied to effect the spinning, a partial introduction of

other polymer into the core-forming holes or sheath-forming holes by a back flow is often observed. In the holes where this takes place, the formation of circular filaments having a true conjugate three-layer structure is inhibited, and thus image-transmitting element defects are formed at parts corresponding to these holes. To prevent this occurrence, first the core-forming polymer is supplied to the core-distributing orifice 31 from the core supply hole 35 and the polymer is filled into a space 30 between this distributing orifice 31 and the core-forming orifice 32, and then polymers other than the core-forming polymer are supplied into the polymer-distributing orifices 32 and 33 and successively extruded to form true conjugate optical fiber precursors. Preferably, the core-forming polymer is supplied into the core-distributing orifice 31 from the core supply hole 35 and filled in the space 30, and then the supply of the core-forming polymer into the core-distributing orifice is stopped and polymers other than the core-forming polymer, i.e., the sheath-forming polymer and sea-forming polymer, are supplied into the polymer-distributing orifices 32 and 33 and sequentially extruded therefrom. Namely, these polymers filled in the distributing orifices are passed through the spinning holes 32a and 33a and are extruded in the form of an independent two-layer structure filament. After a flow of such two-layer structure filaments into the gathering orifice 38 is confirmed, the supply of the core-forming polymer into the core-distributing orifice is again started and the core-forming polymer is extruded from the distributing orifice to form an independent true conjugate type three-layer structure filament. These filaments are gathered at the gathering hole 39 to form a multifilament type optical fiber. By supplying the respective polymers into the corresponding distributing orifices and extruding them therefrom in the above-mentioned order, a multifilament type plastic optical fiber having no or less image-transmitting element defect can be prepared by preventing a back flow of polymers other than the core-forming polymer into the core-distributing orifice.

In the present invention, when the core-forming polymer is supplied and filled in the core-distributing orifice, preferably the core-forming polymer is supplied until many core-forming nozzles 31a are filled with the core-forming polymer 31, and the supply of the core-forming polymer is stopped downstream of the slit portion 36b regulating the flow of the sheath-forming polymer.

As examples of the plastics for forming the core and sheath components of the multifilament type optical fiber of the present invention, there can be mentioned polymethyl methacrylate (n = 1.49), a copolymer (n = 1.47 to 1.50) composed mainly of methyl methacrylate, polystyrene (n = 1.58), a copolymer (n = 1.50 to 1.58) composed mainly of styrene, a styrene/acrylonitrile copolymer (n = 1.56), poly-4-methylpentene-1 (n = 1.46), an ethylene/vinyl acetate copolymer (n = 1.46 to 1.50), a polycarbonate (n = 1.50 to 1.57), polychlorostyrene (n = 1.61), polyvinylidene chloride (n = 1.63), polyvinyl acetate (n = 1.47), a methyl methacrylate/styrene, vinyltoluene or α-methylstyrene/maleic anhydride terpolymer or quadripolymer (n = 1.50 to 1.58), polydimethylsiloxane (n = 1.40), polyacetal (n = 1.48), polytetrafluoroethylene (n = 1.35), polyvinylidene fluoride (n = 1.42), polytrifluoroethylene (n = 1.40), polyperfluoropropylene (n = 1.34), fluoroethylene copolymers or terpolymers (n = 1.35 to 1.40), a polyvinylidene fluoride/polymethyl methacrylate blend (n = 1.42 to 1.46), copolymers composed mainly of a fluoroalkyl methacrylate represented by the general formula $CH_2 = C(CH_3)COORf$ in which Rf stands for $(CH_2)_n(CF_2)_nH$ (n = 1.37 to 1.42), $(CH_2)_m(CF_2)_nF$ (n = 1.37 to 1.40), $CH-(CF_3)_2$ (n = 1.38), $C(CF_3)_3$ (n = 1.36), $CH_2CF_2CHFCF_3$ (n = 1.40) or $CH_2CF(CF_3)_2$ (n = 1.37), copolymers of these fluoroalkyl methacrylates (n = 1.36 to 1.40), copolymers of such a fluoroalkyl methacrylate with methyl methacrylate (n = 1.37 to 1.43), polymers composed mainly of a fluoroalkyl acrylate represented by the general formula $-CH_2 = CH \cdot COOR'f$ in which Rf stands for $-(CH_2)_m(CF_2)_nF$ (n = 1.37 to 1.40), $(CH_2)m(CF_2)_nH$ (n = 1.37 to 1.41), $-CH_2CF_2CHF-CF_3$ (n = 1.41) or $-CH(CH_3)_2$ (n = 1.38), copolymers of these fluoroacrylate (n = 1.36 to 1.41), copolymers of such a fluoroalkyl acrylate and a fluoroalkyl methacrylate as described above (n = 1.36 to 1.41), copolymers of these fluoroalkyl acrylate and fluoroalkyl methacrylate and methyl methacrylate (n = 1.37 to 1.43), homopolymers and copolymers (n = 1.37 to 1.42) composed mainly of a α-fluoroacrylate represented by the general formula $CH_2 = CF \cdot COOR''f$ in which $R''f$ stands for $CH_3$ , $-(CH_2)_m(CF_2)_nF$, $-(CH_2)_m(CF_2)_nH$, $-CH_2CF_2CHFCF_3$ or $-C(CF_3)_2$ , and copolymers of a fluoro(2,2-dimethyl-1,3-dioxozole) represented by the following formula [I]:

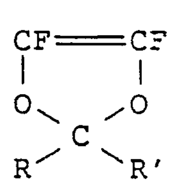

[I]

wherein R and R′ represent a member selected from the group consisting of a trifluoromethyl group, with at least one monomer selected from the group consisting of tetrafluoroethylene, chlorotrifluoroethylene, Rf-CF = $CF_2$ (in which Rf stands for a primary fluoroalkyl group having 1 to 5 carbon atoms) and Rg-CFOCF = $CF_2$ (in which Rg is the same as Rf or stands for a primary fluoroalkyl group having 4 to 12 carbon atoms and an oxygen atom of the ether bond).

As examples of the plastics used as the sea component, there can be mentioned polyamides, polyester elastomers, polyamide elastomers, polystyrene elastomers, polyolefin elastomers, poly-4-methylpentene-1, polyvinylidene fluoride, ionomers, ethylene/ethyl acrylate copolymers, ethylene/vinyl acetate copolymers, vinylidene fluoride copolymers, polymethyl methacrylate, polystyrene, ABS, polybutylene terephthalate and polyethylene, in addition to the above-mentioned core- and sheath-forming polymers.

To obtain a multifilament type optical fiber capable of transmitting a sharp and bright image, preferably the flowability of the sea-forming polymer is higher than the flowability of the sheath-forming polymer for islands.

To increase the true circularity of the cross-sectional shape of the core of islands of the multifilament type optical fiber of the present invention, preferably the following relationship is established among melt flow indexes [$MFR_1$], [$MFR_2$] and [$MFR_3$] representing the flowabilities of the core-forming polymer, the sheath-forming polymer, and the sea-forming polymer, respectively, at the spinning step:
$[MFR_3] \geqq [MFR_2] \geqq [MFR_1]$

Since the cross-section of the multifilament type optical fiber of the present invention has a substantially circular shape, the fiber has no bending directionality, and therefore, the optical fiber is very easily handled. Furthermore, since light or image-transmitting islands having a cross-sectional shape of a substantially true circle are regularly arranged into a hexagonal enclosed package shape in the sea present in the cross-section of the fiber, a multifilament type optical fiber having a superior image-transmittance can be obtained, and this optical fiber is very useful as an image-transmitting member for an endoscope.

The present invention will now be described in detail with reference to the following examples, that by no means limit the scope of the invention.

Example 1

A multifilament type optical fiber was prepared by using a spinneret having a structure as shown in Fig. 3, in which the shape of the gathering opening 39 was circular and the core-, sheath-, and sea-spinning holes 31a, 32a, and 33a were formed in a hexagonal enclosed packaging arrangement as shown in Fig. 1A. The hole number was as shown in Table 1. A polymethyl methacrylate having a refractive index of 1.492 was used as the core of the island component, and a perfluoromethyl methacrylate polymer having a refractive index of 1.415 was used as the sheath. Polymethyl methacrylate was used as the sea component. The MFR's of the respective materials were as shown in Table 1, and the characteristics of the obtained multifilament type optical fiber are also shown in Table 1. The cross-section of each island of the obtained multifilament type optical fiber had a circular or substantially circular shape as shown in Fig. 1B, and the respective islands were formed precisely in a hexagonal enclosed packaging arrangement.

The MFR was measured at a test temperature of 230 °C under a test load of 5 kg according to method A (manual cut-out method) of JIS K-7210-76. As other test conditions, the die length was set at 8.000 ± 0.025 mm, the inner diameter was set at 2.095 ± 0.005 mm, and the amount of the filled sample was 5 g. In the case of method A, the measurement was carried out at a sample-collecting time of about 30 seconds.

Examples 2 and 3

A multifilament type optical fiber was obtained in the same manner as described in Example 1, except that the diameter of the islands was changed as shown in Table 1, and it was found that the transmission attenuation was increased with a reduction of the diameter of the islands. The arrangement of the islands was as good as in Example 1.

Comparative Example 1

A multifilament type optical fiber was obtained in the same manner as described in Example 1, except that the diameter of the islands was changed to 1.8 µm, and since the diameter of the islands was thus too

small, the transmission attenuation was as large as over 20 dB/m and the optical fiber could not be practically used.

Example 4

A multifilament type optical fiber was obtained in the same manner as described in Example 1, except that polyvinylidene fluoride (having a refractive index of 1.42) was used as the sea component. The arrangement of the islands was as good as in Example 1.

Example 5

A multifilament type optical fiber was obtained in the same manner as described in Example 1, except that the sheath component was not used and a perfluoromethyl methacrylate polymer (having a refractive index of 1.415 and MFR of 36) were used as the sea component. The arrangement of the islands was as good as in Example 1.

Table 1

| | Example 1 | Example 2 | Example 3 | Comparative Example 1 | Example 4 | Example 5 |
|---|---|---|---|---|---|---|
| Number of Image-transmitting Elements | 3043 | 3043 | 3043 | 3043 | 3043 | 3043 |
| Diameter (μm) of Islands | 9 | 6 | 4 | 1.8 | 9 | 9 |
| MFR (g/10 min) of Core Component | 1.2 | 1.2 | 1.2 | 1.2 | 1.2 | 1.2 |
| MFR (g/10 min) of Sheath Component | 34 | 34 | 34 | 34 | 34 | 36 |
| MFR (g/10 min) of Sea Component | 43 | 43 | 43 | 43 | 39 | 43 |
| Transmission Attenuation (dB/m) | 1.2 | 2.2 | 5.1 | >20 | 1.1 | 1.0 |
| Core Occupancy Ratio (%) | 53 | 38 | 33 | 8 | 53 | 53 |

Examples 6 through 9

A conjugate spinning was carried out by using a conjugate spinning spinneret having a structure as shown in Fig. 3, in which a filament-gathering orifice having a circular shape was arranged. The hole number was as shown in Table 2. Polymethyl methacrylate having a refractive index of 1.492 was used as the core component constituting islands, and a perfluoromethyl methacrylate polymer having a refractive index of 1.415 was used as the sheath component. Furthermore, polymethyl methacrylate was used as the sea component. A multifilament type optical fiber having the properties as shown in Table 2 was obtained.

In the present examples, since the diameter of the core was 7 μm, the maximum allowable diameter of coarse foreign substances was about 5 μm.

In the present examples, since polymethyl methacrylate and the perfluoromethyl methacrylate polymer, in which the number of foreign substances was small, were used as the core- and sea-forming polymer, the transmission attenuation was small and a multifilament type optical fiber having a reduced number of image-transmitting element defects was obtained. It was found that as the number of foreign substances in the sheath was reduced, the number of image-transmitting element defects and the transmission attenuation was also reduced.

Comparative Example 2

A multifilament type optical fiber was obtained in the same manner as described in Example 6, except that a perfluoromethyl methacrylate polymer containing a large number of foreign substances was used as the sheath-forming polymer. The evaluation results are shown in Table 2. Since the number of foreign substances in the sheath was larger than the predetermined number, as shown in Table 2, the number of

foreign substances in 1 g of the multifilament optical fiber was larger than the predetermined number, and therefore, in the obtained multifilament type optical fiber, many image-transmitting element defects were present and the transmission attenuation was large.

Examples 10 through 13

Multifilament type optical fibers were obtained in the same manner as described in Example 6, except that polymethyl methacrylate containing a number of foreign substances as shown in Table 2 was used as the core-forming polymer.

Since the number of foreign substances was smaller than the predetermined number in each of the core, the sheath and the multifilament type optical fiber, the number of image-transmitting element defects was small and the transmission attenuation was small. It was found that, as the number of foreign substances in the core was reduced, the number of image-transmitting element defects and the transmission attenuation was also reduced.

Comparative Example 3

A multifilament type optical fiber was obtained in the same manner as described in Example 6, except that polymethyl methacrylate containing a large number of foreign substances was used as the core material. The results of a measurement of the characteristics are shown in Table 2.

The number of foreign substances in the core was larger than the predetermined number, and therefore, the number of foreign substances contained in 1 g of the multifilament type optical fiber was larger than the predetermined number, and accordingly, in the obtained multifilament optical fiber, many image-transmitting element defects were present and the transmission attenuation was large.

Example 14

A multifilament type optical fiber was prepared in the same manner as described in Example 6 except that a perfluoromethyl methacrylate polymer containing a number of foreign substances as shown in Table 2 was used as the sheath-forming polymer. The evaluation results are shown in Table 2.

Since the number of foreign substances in each of the core, the sheath and the multifilament type optical fiber was smaller than the predetermined number, the number of image-transmitting element defects was small and the transmission attenuation was small.

Table 2

| | | Example 6 | Example 7 | Example 8 | Example 9 | Comparative Example 2 | Example 10 | Example 11 | Example 12 | Example 13 | Comparative Example 3 | Example 14 |
|---|---|---|---|---|---|---|---|---|---|---|---|---|
| Number of Image-transmitting Elements | | 3043 | 3043 | 3043 | 3043 | 3043 | 3043 | 3043 | 3043 | 3043 | 3043 | 3043 |
| Diameter (μm) of Core | | 7 | 7 | 7 | 7 | 7 | 7 | 7 | 7 | 7 | 7 | 7 |
| Core Material | Number per Gram of Foreign Substances Larger Than 0.5 μm | 1800 | 1800 | 1800 | 1800 | 1800 | 980 | 670 | 2500 | 3600 | 5400 | 980 |
| | Number per Gram of Foreign Substances Larger Than 5 μm | 32 | 32 | 32 | 32 | 32 | 14 | 8 | 39 | 47 | 89 | 14 |
| Sheath Material | Number per Gram of Foreign Substances Larger Than 0.5 μm | 2200 | 2900 | 1200 | 930 | 4300 | 2200 | 2200 | 2200 | 2200 | 2200 | 930 |
| | Number per Gram of Foreign Substances Larger Than 5 μm | 40 | 47 | 19 | 16 | 65 | 40 | 40 | 40 | 40 | 40 | 16 |
| Optical Fiber | Number per Gram of Foreign Substances Larger Than 0.5 μm | 7600 | 8500 | 6200 | 6100 | 11000 | 6500 | 6200 | 8400 | 9600 | 12000 | 5100 |
| Transmission Attenuation (dB/m) | | 1.8 | 1.9 | 1.5 | 1.3 | 2.0 | 0.95 | 0.92 | 1.8 | 2.7 | 2.1 | 0.74 |
| Length (m) of Multifilament Type Optical Fiber | | 3 | 3 | 3 | 3 | 3 | 3 | 3 | 3 | 3 | 3 | 3 |

Table 2 (Continued)

| | Example 6 | Example 7 | Example 8 | Example 9 | Comparative Example 2 | Example 10 | Example 11 | Example 12 | Example 13 | Comparative Example 3 | Example 14 |
|---|---|---|---|---|---|---|---|---|---|---|---|
| Total Number of Image-transmitting Element Defects | 17 | 22 | 7 | 3 | 39 | 6 | 3 | 25 | 24 | 71 | 1 |
| Number of Image-transmitting Element Defects per 100 Image-transmitting Elements | 0.56 | 0.72 | 0.23 | 0.10 | 1.3 | | 0.10 | 0.82 | 0.79 | 2.3 | 0.03 |
| Number of Stain Image-transmitting Elements | 45 | 67 | 15 | 9 | 130 | 17 | 5 | 73 | 80 | about 300 | 2 |
| Number of Stain Image-transmitting Elements per 100 Image-transmitting Elements | 1.5 | 2.2 | 0.49 | 0.30 | 4.3 | 0.56 | 0.16 | 2.4 | 2.6 | 9.9 | 0.065 |
| Cross-sectional Shape of Optical Fiber | Circular, 0.5 mm diameter | Circular, 0.5 mm diameter | Circular, 0.5 mm diameter | Circular, 0.5 mm diameter | Circular, 0.5 mm diameter | Circular, 0.5 mm diameter | Circular, 0.5 mm diameter | Circular, 0.5 mm diameter | Circular, 0.5 mm diameter | Circular, 0.5 mm diameter | Circular, 0.5 mm diameter |

Example 15

A multifilament type optical fiber was obtained in the same manner as described in Example 6, except that the diameter of the core was changed to 5 µm. The evaluation results are shown in Table 3. In the present example, a foreign substance having a size larger than 3.5 µm was regarded as a coarse foreign substance.

Since the number of foreign substances in each of the core, the sheath and the multifilament type optical fiber was smaller than the predetermined number, the number of picture element defects was small and the transmission attenuation was small.

Table 3

| | | Example 15 |
|---|---|---|
| Number of Picture Elements | | 3043 |
| Diameter (µm) of Core | | 5 |
| Core Material | Number per Gram of Foreign Substances Larger Than 0.5 µm | 980 |
| | Number per Gram of Foreign Substances Larger Than 3.5 µm | 29 |
| Sheath Material | Number per Gram of Foreign Substances Larger Than 0.5 µm | 930 |
| | Number per Gram of Foreign Substances Larger Than 3.5 µm | 35 |
| Optical Fiber | Number per Gram of Foreign Substances Larger Than 0.5 µm | 5100 |
| Transmission Attenuation (dB/m) | | 1.8 |
| Length (m) of Multifilament Type Optical Fiber | | 3 |
| Total Number of Image-transmitting Element Defects | | 7 |
| Number of Stain Image-transmitting Elements | | 17 |
| Number of Stain Image-transmitting Elements per 100 Image-transmitting Elements. | | 0.56 |
| Number of Image-transmitting Element Defects per 100 Image-transmitting Elements | | 0.23 |
| Shape of Fiber | | Circular, 0.4 mm diameter |

Example 16

A spinneret having a cross-sectional structure as shown in Fig. 3 and a substantially circular peripheral shape was used, polymethyl methacrylate was used as the core-forming polymer, a blend comprising 50% by weight of polyvinylidene fluoride and 50% by weight of polymethyl methacrylate was used as the sheath-forming polymer, and an ethylene/vinyl acetate copolymer was used as the sea-forming polymer. First, the core-forming polymer was supplied to the core-supplying orifice, and when the pressure loss in this supplying orifice was raised from 10 $kg/cm^2$ to 40 $kg/cm^2$, the supply of the core-forming polymer was stopped. Accordingly, the core-forming polymer was filled in the space shown in Fig. 1, and the sheath-forming polymer and sea-forming polymer were then simultaneously supplied to the sheath-supplying orifice and the sea-supplying orifice, whereby the polymers were filled in the orifices as required. The sheath-forming polymer and the sea-forming polymer were concentrically extruded independently. The obtained filaments were gathered at the gathering orifice, and the supply of the core-forming polymer was again started and the filaments were extruded from the gathering opening 39 in the form of a core/sheath/sea true conjugate three-layer structure fiber. The feed rate of the core-forming polymer was 24 g/min, the feed rate of the sheath-forming polymer was 1.6 g/min, and the feed rate of the sea-forming

polymer was 1.6 g/min. Accordingly, a multifilament type plastic optical fiber having an island diameter of 50 μm was obtained, and when the transmission attenuation of the obtained multifilament type plastic optical fiber was measured, it was found to be 4 dB/m. When a light transmission was carried out along a length of 5 m, a good image having no image-transmitting element defects was transmitted. When the spinneret was disassembled after the spinning operation, no sheath-forming polymer or sea-forming polymer in the core-distributing orifice was observed.

## Claims

1. A multifilament type plastic optical fiber having a circular or substantially circular peripheral shape in the cross-section of the fiber, wherein 50 to 30000 islands having a diameter of 2 to 70 μm, a light-transmitting property and a circular cross-sectional shape are integrally arranged in the sea in the form of a hexagonal enclosed package.

2. A multifilament type plastic optical fiber as set forth in claim 1, wherein the islands have a cross-sectional shape of a core/sheath structure.

3. A multifilament type plastic optical fiber as set forth in claim 1 or 2, wherein the diameter of cores of the islands, through which light is mainly transmitted, is 2 to 20 μm, and the number of light- or image-transmitting elements not transmitting light is less than 1 per 100 of the islands.

4. A multifilament type plastic optical fiber as set forth in claim 3, wherein the number of light- or image-transmitting element defects not transmitting light is less than 0.1 per 100 of the islands.

5. A multifilament type plastic optical fiber as set forth in claim 3 or 4, wherein the number of islands having a light transmission quantity lower than M x 0.7, in which M represents the average value of the light transmission quantity in all of the islands, is less than 3 per 100 of the islands.

6. A multifilament type plastic optical fiber as set forth in any of claims 1 through 5, wherein the number of foreign substances having a diameter larger than 0.5 μm, which are contained in 1 g of the resin constituting the optical fiber, is less than 10,000.

7. A multifilament type plastic optical fiber as set forth in claim 6, wherein the number of dust particles having a diameter larger than 0.5 μm, which are contained in 1 g of the resin constituting cores of the islands through which light is mainly transmitted, is less than 2,000.

8. A multifilament type plastic optical fiber as set forth in claim 7, wherein the number of dust particles having a diameter larger than 70% of the diameter of the cores, which are contained in 1 g of the resin constituting the cores of the islands, through which light is mainly transmitted, is less than 50.

9. A multifilament type plastic optical fiber as set forth in claim 8, wherein the number of dust particles having a diameter larger than 70% of the diameter of the cores, which are contained in 1 g of the resin constituting the cores of the islands through which light is mainly transmitted, is less than 10.

10. A process for the preparation of a multifilament type plastic optical fiber, which comprises spinning island-forming and sea-forming plastics by using an island and sea-forming nozzle having holes arranged in the form of a hexagonal enclosed package, extruding the plastics in the form of independent optical fiber precursors having a concentric two-layer structure, and gathering and integrating the extruded filaments to form a multifilament optical fiber in which 50 to 30,000 light-transmitting islands having a diameter of 2 to 70 μm are arranged in the sea in the form of a hexagonal enclosed package, and the cross-sectional peripheral shape of the fiber is substantially circular.

11. A process for the preparation of a multifilament type plastic optical fiber, which comprises extruding core-forming, sheath-forming and sea-forming plastics in the form of independent filaments having a concentric three-layer structure by using a core-, sheath- and sea-forming nozzle having holes arranged in the form of a hexagonal enclosed package, and gathering and integrating the extruded filaments to form a multifilament type plastic optical fiber in which 50 to 30,000 of light-transmitting islands having a diameter of 2 to 70 μm and islands of core-sheath structure are arranged in the form of a hexagonal enclosed package in the sea, and the cross-sectional peripheral shape of the fiber is substantially circular.

12. A process for the preparation of a multifilament type plastic optical fiber free of image-transmitting element defects, which comprises using a spinneret assembled by arranging in sequence a core-distributing orifice, a core-forming orifice having many core-forming holes and a sea-forming orifice having sea-forming holes and sea-overflowing projections formed on the upper outer peripheries of the sea-supplying holes, the holes on each orifice surface being arranged in the form of a hexagonal enclosed package, filling a core-forming polymer in a core supply portion in the core-supplying orifice and the core-forming orifice, supplying a sea-forming polymer to the sea-forming orifice, extruding the polymers, forming a true conjugate fiber by the melt conjugate spinning method, and gathering and fusion-bonding the

extruded filaments to form a multifilament type optical fiber in which islands are arranged in the form of a hexagonal enclosed package.

Fig. 1A

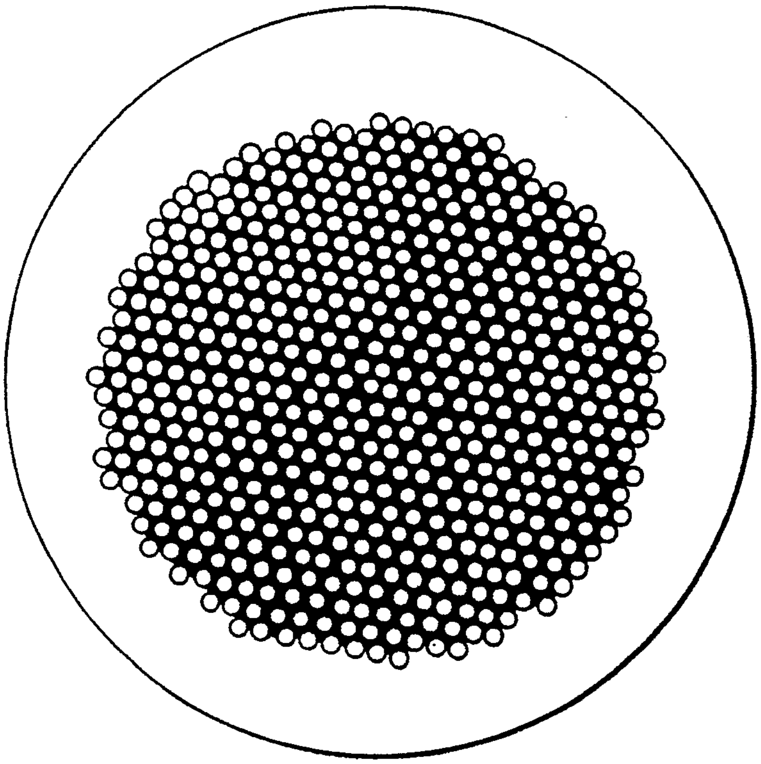

Fig. 1B

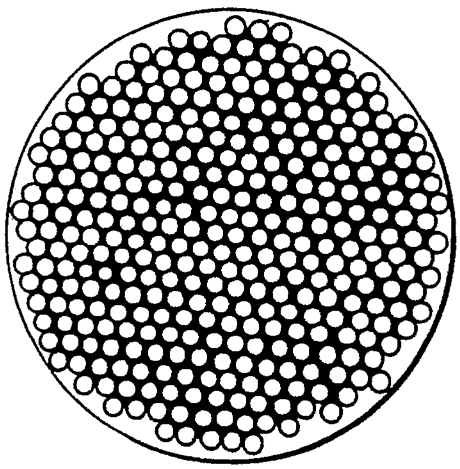

Fig. 2A

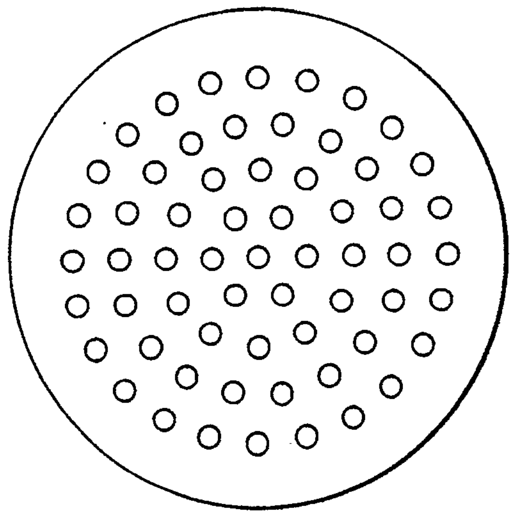

Fig. 2B

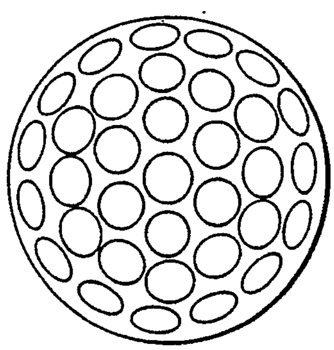

Fig. 3